# EUROPEAN PATENT APPLICATION

(11) **EP 2 202 680 A1**
(43) Date of publication of application: **30.06.2010**
(21) Application number: 07829829.6
(22) Date of filing: 15.10.2007
(51) Int. Cl.: G06Q 30/00, G10L 15/00, H04M 3/42, H04M 11/00

(54) **ADVERTISEMENT INFORMATION MANAGEMENT METHOD, ADVERTISEMENT INFORMATION MANAGEMENT DEVICE, AND ADVERTISEMENT INFORMATION MANAGEMENT PROGRAM**

(71) Applicant: Comsquare Co., Ltd., Tokyo 135-0043 (JP)
(72) Inventor: UESHIMA, Yasushi, Tokyo 135-0043 (JP); MUKAIDA, Takashi, Tokyo 135-0043 (JP)
(74) Representative: Staudt, Hans-Peter
(86) International application number: PCT/JP2007/070095
(87) International publication number: WO 2009/050773

(57) **Abstract**

Disclosed are an advertisement information management method, an advertisement information management device, and an advertisement information management program with which, using keyword information, it is possible to readily recognize which advertisement information a call has been made based on without the need to prepare many phone numbers.

This advertisement information management method includes: acquiring voice information 23 vocally inputted in a received call; extracting text information 24 included within the voice information 23 by phonetically analyzing the voice information 23; and extracting advertisement information 9a associated with keyword information 21a corresponding to the text information 24 from an advertisement information database D4 built with keyword information 21 and advertisement information 9 associated with each other.

## Description

### Technical Field

The present invention relates to an information management method, an information management device, an information anagement program, and a call receiving device, and particularly relates to an information management method, etc. capable of effectively using an information source by reusing identification information in a Pay Per Call system.

### Background Art

Pay per Click systems have been used as one method of advertising using web pages on the Internet. A pay-per-click system is a system in which an advertising agency charges an advertisement fee to an advertiser according to the number of times an item of advertisement information displayed on a web page is clicked.

For example, when advertisement information of the advertiser is posted on a web page of an advertisement providing site and a user who has viewed the page selects (clicks) the advertisement information, a website managed by the advertiser is linked to and the user can view detailed information regarding the advertisement information. In addition, according to the number of clicks made on the advertisement information, the advertiser pays an advertisement fee to the administrator of the portal site.

This method is frequently used in portal (entrance) sites that have many users (viewers) and are capable of providing high advertising effectiveness. The administrator of the portal site establishes frames for advertisements as part of the site page, runs advertisements by lending the frames for advertisements to advertisers, and collects advertisement fees according to the number of clicks made on each item of advertisement information.

However, this pay-per-click system has a problem in that, when an advertiser does not have their own site, no site can be set to be linked to and no detailed information regarding the advertisement information can be provided. Moreover, because payment of an advertisement fee is generated simply through clicks made on advertisement information, the effect of "direct contact with users (clients)" cannot be obtained for the cost of advertising.

Moreover, because the advertisement fee is generated according to the number of clicks made even when a user unintentionally clicks the advertisement information or intentionally repeats clicking, the association between the advertising effectiveness and the advertisement fee may be decreased.

Therefore, another system has been suggested in which a phone number corresponding to each advertiser is posted on a web page of an advertisement providing site along with the advertisement information, and when a user who has seen the information calls the advertiser, an advertisement fee is charged based on the establishment of the phone call. One of the systems using this advertising method is referred to as a Pay per Call system, such as the one described in Patent Document 1, for example.

However, when advertisement information is posted on many advertisement providing sites, if all phone numbers to be posted are uniformly the same phone number, it is not possible to determine which advertisement providing site the user has seen to make the call. Therefore, it is not possible to ascertain which advertisement providing sites have a high advertisement effect and which advertisement providing sites have a low advertisement effect, and there is a problem in that it is difficult to charge advertisement fees corresponding to the advertisement effect.

Therefore, a method has been suggested in which different phone numbers are assigned to individual items of advertisement information and posted on different advertisement providing sites in order to ascertain, based on the phone number to which the call was made, which advertisement providing site the user has seen to make the call (e.g., see Patent Document 2). According to this method, the advertisement effect of each advertisement providing site can be ascertained and an advertisement fee corresponding to the advertisement effect can be charged.

[Patent Document 1] Japanese Published Unexamined Application No. 2005-115945
[Patent Document 2] International Publication No. WO2007/015531

### Disclosure of the Invention

### Problems to be Resolved by the Invention

In recent years, there are many advertisement providing sites. For example, if an advertiser posts their advertisement information on 10,000 advertisement providing sites and different phone numbers are assigned to each of these sites, it is necessary to prepare 10,000 phone numbers, which is a huge number.

Furthermore, advertisement information for a plurality of merchandises (the object of an advertisement, such as a product or a service) may be posted within one advertisement providing site. If an advertiser posts advertisement information for 10,000 types of merchandises within one advertisement providing site and assigns different phone numbers for individual merchandise, it is necessary to prepare 100,000,000 phone numbers (10,000 sites × 10,000 merchandises).

As described above, in order to assign different phone numbers for each of many advertisement providing sites and merchandises, the phone numbers need to have many digits. However, when the number of digits of a phone number increases, there are increases in the number of mistakes made by the users making a call as well as the number of users who decide not to call due to the burden, leading to a decrease in the advertisement effect. Depending on the specification of the call receiving system, the number of digits of a phone number that can be assigned to advertisement information is limited, and the number of digits may not be increased without reason.

Moreover, because the number of advertisement providing sites an advertiser posts on and the types of merchandises they deal with may change, it is necessary to obtain a surplus number of phone numbers for each advertiser (or each advertisement providing site). This causes rapid depletion of the resources for phone numbers even if the number of digits of a phone number is increased, and securement of phone numbers for each advertiser needs to be addressed by further increasing the number of digits of the phone numbers.

The present invention has been devised by taking the above situation into consideration, and the exemplary issue is to provide an advertisement information management method, an advertisement information management device, and an advertisement information management program with which, using keyword information, it is possible to readily recognize which advertisement information a call has been made based on without the need to prepare many phone numbers.

### Means of Solving the Problems

In order to solve the above problems, an advertisement information management method related to an exemplary aspect of the present invention includes acquiring voice information vocally inputted in a received call: extracting text information included within the voice information by phonetically analyzing the voice information; and extracting advertisement information associated with keyword information corresponding to the text information from an advertisement information database built with the keyword information and the advertisement information associated with each other.

Because the advertisement information can be specified and extracted based on the keyword information, it is unnecessary to prepare many phone numbers for individual items of the advertisement information in order to specify the advertisement information. Moreover, in specifying the advertisement information, because the user who has called can only input the voice information by voice (i.e., orally produced sound), the input of information can be readily performed. Keyword information is more likely to stay in the memory of a user than enumeration information with numbers and symbols that have no special meaning or context, and this can reduce input mistakes during input based n the user's voice.

The advertisement information may be associated with at least one of any of: advertiser information that indicates the advertiser related to the advertisement information; advertisement providing site information that indicates the advertisement providing site to which the advertisement information is provided; or merchandise information that indicates the merchandise related to the advertisement information.

By specifying and extracting the advertisement information, at least one of any of the advertiser, the advertisement providing site, or the merchandise can also be specified. Therefore, by acquiring voice information based on keyword information, it is possible to specify which advertisement information the call from the user has been made based on, which advertisement providing site the advertisement information from which the call has been made was provided to, or which merchandise the advertisement information from which the call has been made is related to. This allows for the determination of the advertisement effect and the processing of fees for not only individual items of advertisement information but also each advertiser, advertisement providing site, or merchandise.

In addition, here, for example, the advertiser information includes the concept of an advertiser ID assigned to each advertiser, with an advertisement providing site ID assigned to each advertisement providing site for the advertisement providing site information, and a merchandise ID assigned to each merchandise for the merchandise information. Moreover, the advertisement information may be associated with an advertising agent ID assigned to each advertising agent that undertakes provision of an advertisement to an advertisement providing site based on a contract with the advertiser and a personal ID assigned to each personal site and personal blog when an individual posts the advertisement information on his/her own website or blog, etc. based on a contract with the administrator of the advertisement providing site.

A step of generating the keyword information based on a dictionary database built with a plurality of items of word information may further be included.

Because the keyword information is generated based on the dictionary database, it is unnecessary to preliminarily retain a plurality of items of keyword information. If many items of keyword information are necessary, keyword information can be sequentially generated based on the dictionary database. Moreover, by combining a plurality of items of word information, variations of the keyword information can be increased. For example, by combining adjectives such as "red" and "white" with nouns such as "car" and "bag", keyword information having meaning and context, such as "red car" and "white bag", can be generated. By changing the combinations, new keyword information, such as "red bag" and "white car", can be generated. Because the keyword information based on such combinations creates fixed concepts, it is easy for a user to remember. Therefore, this can further contribute to the reduction of input mistakes made at the time of voice input.

A step of associating the advertisement information with the keyword information and sending the keyword information may also be provided.

If the keyword information is sent to a web server upon association between the advertisement information and the keyword information, the keyword information can be posted on the website built within the web server. Therefore, the keyword information can be provided to the user via the website.

During the sending, phone number information that indicates a receiver of the call may be sent externally with the keyword information.

Because phone number information is provided externally with the keyword information, the phone number can be posted with the keyword information, for example. Therefore, the phone number can be provided to the user via the advertisement providing site, and the user can make a call based on the phone number.

During the sending, at least one of either the advertisement information or identification information for identifying the call destination associated with the advertisement information may be sent externally with the keyword information.

Because at least one of either the advertisement information or the identification information is provided externally with the keyword information, at least one of either the advertisement information or the identification information can be posted on the advertisement providing site with the keyword information, for example. If the advertisement information is posted on the advertisement providing site, the user can confirm the advertisement information and make a call. If the identification information is posted on the advertisement providing site, the user can input the identification information by making a call.

In addition, the identification information is information for identifying at least the call destination, and the advertiser of the advertisement information can be specified based on the identification information. Moreover, it is understood that the identification information may be associated with the advertisement information, the advertisement providing site information, and the merchandise information, etc.

A step of canceling the association between the advertisement information and the keyword information and associating another advertisement information different from the advertisement information with the keyword information may also be provided.

Because the association between the advertisement information and the keyword information can be changed, the keyword information can be dynamically associated (assigned) with respect to the advertisement information. Because the keyword information can be used as being associated with other items of advertisement information after the association with the advertisement information is cancelled, it can be effectively reused if there are few types of keyword information.

An another exemplary aspect of the present invention, an advertisement information management device includes: an information acquisition part that acquires voice information vocally inputted in a received call; an information analyzing part that extracts text information included within the voice information by phonetically analyzing the voice information; and an information extracting part that extracts advertisement information associated with keyword information corresponding to the text information from an advertisement information database built with the keyword information and the advertisement information associated with each other.

Because the advertisement information can be specified and extracted based on the keyword information, it is unnecessary to prepare many phone numbers for individual items of advertisement information in order to specify the advertisement information. Moreover, in specifying the advertisement information, because the user who has called can only input the voice information by voice (i.e., orally produced sound), the input of information can be readily performed. Keyword information is more likely to stay in the memory of a user than enumeration information with numbers and symbols that have no special meaning or context, and this can reduce input mistakes made during input based on a user's voice.

In another exemplary aspect of the present invention, an advertisement information management program causes a computer to function as: an information acquisition part that acquires voice information vocally inputted in a received call, an information analyzing part that extracts text information included within the voice information by phonetically analyzing the voice information; and an information extracting part that extracts advertisement information associated with keyword information corresponding to the text information from an advertisement information database built with the keyword information and the advertisement information associated with each other.

Because the advertisement information can be specified and extracted based on the keyword information, it is unnecessary to prepare many phone numbers for individual items of advertisement information in order to specify the advertisement information. Moreover, in specifying the advertisement information, because the user who has called can only input the voice information by voice (i.e., orally produced sound), the input of information can be readily performed. Keyword information is more likely to stay in the memory of a user than enumeration information with numbers and symbols that have no special meaning or context, and this can reduce input mistakes made during input based on a user's voice.

A computer may be caused to further function as: an information association executing part that associates the advertisement information with the keyword information and stores them in the advertisement information database; and an information sending part that sends the keyword information externally.

If the keyword information is sent externally upon associating the advertisement information and the keyword information, the keyword information can be posted on the advertisement providing site, for example. Therefore, the keyword information can be provided to the user via the advertisement providing site.

Further objectives and other characteristics of the present invention will now be described based on a preferred embodiment described with reference to the attached drawings below.

### Effects of the Invention

According to the present invention, it is unnecessary to prepare many phone numbers and it is possible to ascertain which advertisement information the user has seen to make a call. Because keyword information is used to specify the advertisement information, during the call, the user only has to say a keyword and can readily input information (through vocal production). If the keyword information has a fixed meaning and content, the user can readily remember it, and therefore, input mistakes made during voice input can be reduced. Furthermore, by dynamically associating the keyword information with the advertisement information, the keyword information can be effectively reused.

### Detailed Description of the Invention

An information management system S using an advertisement information management method according to an embodiment of the present invention will be described below with reference to the drawings. Furthermore, in the present specification, a server means a server computer, and a site (a website and an Internet site are also generally synonymous) means a collective entity of web pages built virtually within the server. A web page can be specified by a URL and is a virtual information-providing medium in which various types of information, such as character information and image information, are posted. Herein, "posting on a website" is used in a synonymous manner with "posting on a web page", and "viewing a website" is used in a synonymous manner with "viewing a web page".

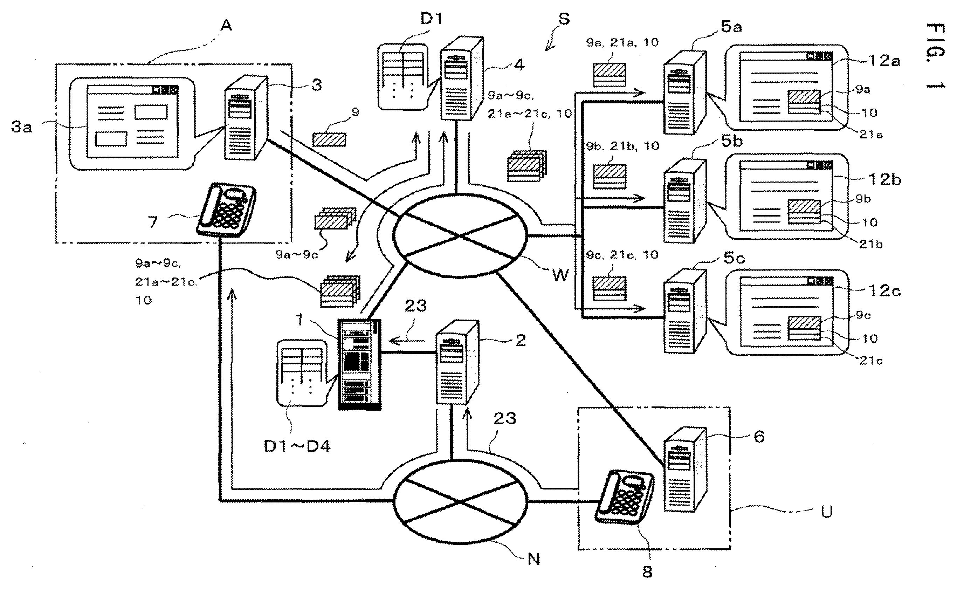

Fig. 1 is a schematic diagram showing the overall configuration of this advertisement information management system S. This advertisement information management system S is roughly configured with an advertisement information management server (advertisement information management device) 1 and a call receiving server (call receiving device) 2, and the advertisement information management server 1 is connected to an advertiser's server 3, an agent's server 4, advertisement providing servers 5a-5c, and a user's computer 6 via an Internet network W in a manner that allows information to be received and sent. The advertiser and the user have an advertiser's phone 7 and a user's phone 8, respectively, which are connected to the call receiving server 2 via a telephone network N.

In addition, in the present embodiment, an example is described in which the advertisement information management server 1 and the call receiving server 2 are configured as different bodies, but it is understood that both may be configured as one server computer. Moreover, even when the advertisement information management server 1 and the call receiving server 2 are configured as different bodies, the both only need to cooperate with each other to exert their functions and retain databases, and therefore, the functions exerted by each of them and the databases retained by each of them are not limited to the case described in the present embodiment.

The advertiser's server 3 is a server computer managed by an advertiser A, wherein an advertiser's website (advertiser's site) 3a is built internally. This advertiser's site 3a is linked to, for example, advertisement information 9 (9a-9c) described later, and when a user U performs a specific operation (e.g., click operation) with respect to the advertisement information 9 (9a-9c), the content (detailed information of advertisement information) of the advertiser's site 3a is displayed on the user's computer 6. Moreover, the advertiser A can send the advertisement information 9 to the agent's server 4 via the advertiser's server 3.

This advertisement information 9 is a banner image configured to include, for example, decorative advertisement images to which various colors and patterns are added so as to attract the attention of users and explanatory advertisement images that briefly explain the content of the advertisement of the advertiser A.

The agent's server 4 is a server computer managed by the advertising agent and connected to the plurality of advertisement providing servers 5a-5c via the Internet network W and controls and manages these advertisement providing servers 5a-5c. The agent's server 4 has an internal storage device, which is not shown. A management ID 14 is stored within the storage device, and a management ID database D1 is built as shown in Fig. 2. This management ID database D1 is built by associating the management ID (management information) 14 with the advertisement information 9.

The agent's server 4 has a function to associate the management ID 14 with advertisement information 9 when it receives the advertisement information 9 from the advertiser's server 3. This management ID 14 is information used to perform billing management for individual items of the advertisement information 9 and is information for specifying the advertisement information 9. Specifically, the management ID 14 is management information assigned to individual items of the advertisement information 9 and for individual advertisement providing sites 12a-12c on which the advertisement information 9 is posted. Therefore, when the agent's server 4 posts one item of the advertisement information 9 on a plurality of advertisement providing sites 12a-12c, a plurality of management IDs 14a-14c is assigned in response to the individual advertisement providing sites 12a-12c, and these and the advertisement information 9 are associated and sent to the advertisement information management server 1 as the advertisement information 9a-9c, respectively.

The management ID 14 is configured to include, for example, an MID (an advertiser ID) 14p, a DID (an advertising agent ID) 14q, a PID (a merchandise ID) 14r, and an SID (an advertisement providing site ID) 14s. Specifically, based on the management ID 14, it is possible to identify specific advertisement information for specific merchandise provided on a specific advertisement providing site managed by a specific advertising agent. Furthermore, when the management ID 14 includes a UID (a personal page ID) 14t, based on the management ID 14, it is possible to identify which personal page (or personal blog, etc.) the advertisement information 9 (9a-9c) is posted on based on a contract with the administrator (advertisement provider) of the specific advertisement providing site.

The agent's server 4 sends the advertisement information 9a-9c to the advertisement information management server 1 and receives the advertisement information 9a-9c associated with keyword information 21 (21a-21c) from the advertisement information management server 1. In addition, it also has a function to send the received advertisement information 9a-9c to the plurality of advertisement providing servers 5a-5c, respectively. The details of this keyword information 21 will be described later. In addition, the management ID database D1 is also stored within an advertisement information management server 1 described later. The management ID database D1 may be created by either the agent's server 4 or the advertisement information management server 1.

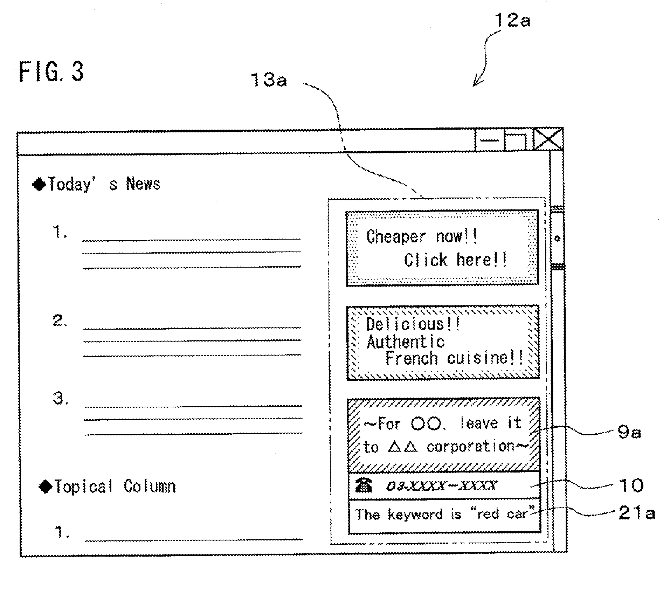

The advertisement providing servers 5a-5c are server computers managed by the advertisement provider, and the advertisement providing sites 12a-12c are respectively built internally therein. Fig. 3 is an example of a display screen of a web page of the advertisement providing site 12a. This advertisement providing site 12a is a so-called portal site and various types of information are posted on the web page. An advertisement frame 13a is placed on the web page and the advertisement information 9a received from the agent's server 4 is posted within the advertisement frame 13a.

In the advertisement frame 13a of the advertisement providing site 12a, keyword information 21a and phone number information 10 are posted with the advertisement information 9a, and it has a function to provide the user U with the keyword information 21a and the phone number information 10 while attracting the user U's attention. For example, as shown in Fig. 3, the keyword information 21a and the phone number information 10 may be posted and displayed within the advertisement frame 13a of the advertisement providing site 12a with the advertisement information 9. Moreover, when the mouse pointer is moved onto the advertisement information 9, the keyword information 21a and the phone number information 10 may be displayed in a balloon, or by clicking the advertisement information 9 with the mouse, another window is displayed and the keyword information 21a and the phone number information 10 may be displayed within the window.

The keyword information 21 is information generated with a combination of a plurality of items of word information based on a dictionary database D2 described later. For example, "red car" is generated as the keyword information 21a with a combination of the word information of the adjective "red" and the word information of the noun "car." Moreover, for example, "white bag" is generated as the keyword information 21b with a combination of the word information of the adjective "white" and the word information of the noun "bag", and "red bag" is generated as the keyword information 21c with a combination of the word information of the adjective "red" and the word information of the noun "bag." These items of keyword information 21a-21c are associated with the advertisement information 9a-9c, respectively, and are sent to the advertisement providing servers 5a-5c, respectively.

The phone number information 10 is a phone number that indicates the call receiving server 2 as a receiver of the call. For example, if a phone number acting as a server identification number assigned to the call receiving server 2 is "0125423", this 6-digit number is posted on the advertisement providing site 12a as the phone number information 10 with the advertisement information 9a. In this case, if the user U who has viewed the advertisement providing site 12a dials the phone number "0125423" from the user's phone 8, the call is received by the call receiving server 2. It is understood that the phone number information 10 is not limited to 6 digits and may be a number of any digits necessary to identify the call receiving server 2 in the telephone network N.

In addition, in the present embodiment, a case is described in which the phone number information 10 is a 6-digit server identification number "0125423" as described above, but it is understood that the phone number information 10 may include the identification information 11 for identifying the advertiser A as the call destination. For example, the phone number information 10 may be 10-digit identification information 11, specifically "0125423-0011", that includes the 6-digit server identification number "0125423" that indicates the call receiving server 2 and a 4-digit advertiser identification number "0011" for identifying the advertiser A in the call receiving server 2, and this identification information 11 may be posted on the advertisement providing site 12a with the advertisement information 9a. Not only does this allow the call receiving server 2 acting as the call receiver to be specified by the phone number information 10, but it can also specify the advertiser A as the call destination.

In this case as well, the advertiser identification number is not limited to 4 digits and may be a number of any digits necessary to identity the advertiser A in the call receiving server 2. In this case, the identification information 11 "0125423-0011" and the phone number of the advertiser A (the phone number assigned to the advertiser's phone 7) are associated with each other within the call receiving server 2, and when the user U dials "0125423-0011," the call is received by the call receiving server 2 and connected to the advertiser's phone 7.

The advertisement information 9b, 9c is similarly posted on the advertisement providing sites 12b, 12c. The phone number information 10 to be posted on the advertisement providing sites 12b, 12c with the advertisement information 9b, 9c is common with the information to be posted on the advertisement providing site 12a, but the keyword information 21b, 21c is different from the keyword information 21a. Specifically, based on the dictionary database D2, different keyword information 21b ("white bag") and keyword information 21c ("red bag") are generated, associated with the advertisement information 9b, 9c, respectively, and sent to the advertisement providing servers 5b, 5c, respectively. Therefore, based on the keyword information 21a-21c, it is possible to ascertain which advertisement providing sites 12a-12c the user U has viewed to make the call.

In addition, in the present embodiment, the agent's server 4 managed by the advertising agent and the advertisement providing servers 5a-5c managed by the advertisement provider have been described as separate servers, but it is understood that these are not necessarily separate. For example, one advertising agent may manage the plurality of advertisement providing servers 5a-5c, the agent's server 4 may be eliminated, and the individual advertisement providing servers 5a-5c may also function as the agent's server. Moreover, based on a contract with the administrator of the advertisement providing sites 12a-12c, the advertisement information 9a-9c may be posted on a plurality of personal pages associated with the individual advertisement providing sites 12a-12c.

The user's computer 6 is a computer to be managed and used by the user U who views the advertisement providing sites 12a-12c. When the user U views the advertisement providing site 12a on the user's computer 6 via the Internet network W, the advertisement information 9a is displayed on the display screen of the user's computer 6 with various types of information within the advertisement providing site 12a.

Subsequently, when the user U is interested in the advertisement information 9a and makes a call from the user's phone 8 at home based on the displayed phone number information 10, which is "0125423," the call is received by the call receiving server 2.

The advertisement information management server 1 is a server computer that configures the major part of this advertisement information management system S and it is connected to the agent's server 4 via the Internet network W. The advertisement information management server 1 has a function to associate the advertisement information 9a-9c received from the agent's server 4 with the keyword information 21a-21c, respectively, and to send the advertisement information 9a-9c to the agent's server 4 with the keyword information 21a-21c and the phone number information 10. Furthermore, it also has a function to extract any of the associated advertisement information 9 (9a-9c) based on the voice information 23 when voice information 23 is received from the call receiving server 2 described later.

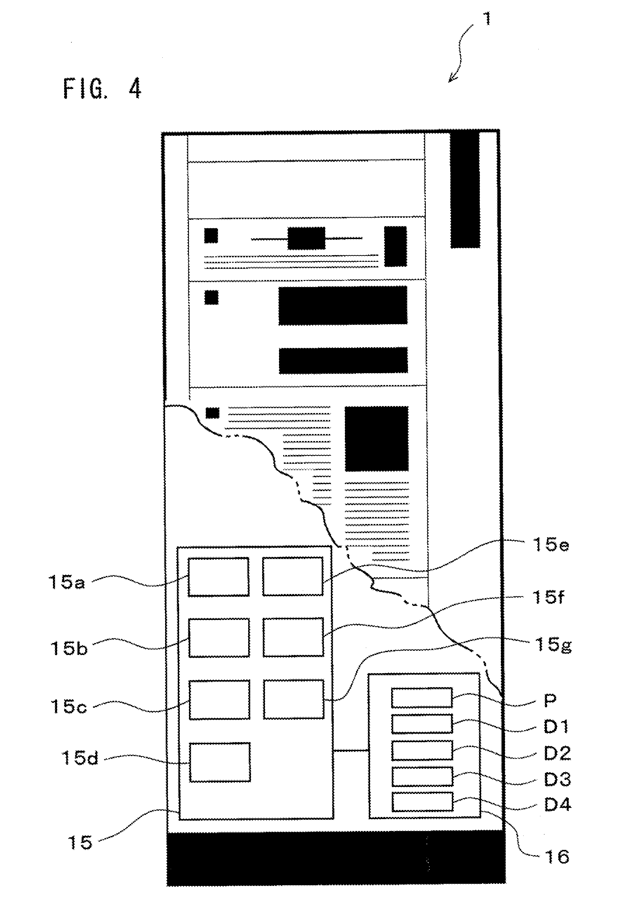

Fig. 4 is a block diagram illustrating an outline of the internal structure of this advertisement information management server 1. The advertisement information management server 1 has an internal CPU (central processing unit) 15 and a storage device 16. This CPU 15 exerts each function as the advertisement information management server 1 and acts as the major part of the computer.

An advertisement information management program P, the management ID database D1, the dictionary database D2, a keyword information database D3, and an advertisement information database D4 are stored within the storage device 16. Using the advertisement information management program P, the CPU 15 functions as an information generating part 15a, an information association executing part 15b, an information association canceling part 15c, an information sending part 15d, an information acquisition part 15e, an information analyzing part 15f, and an information extracting part 15g.

With the exception of the management ID database D1 that has already been described above, each database stored within the storage device 16 will be described below.

Fig. 5 is a diagram of the data structure of the dictionary database D2. The dictionary database D2 is built with a plurality of items of word information 22. The word information 22 includes, for example, adjectives such as "red" and "white", nouns such as "car" and "bag", and verbs such as "run" and "talk". For example, word class information that indicates the word class may be associated with this plurality of items of word information 22 and stored within the dictionary database D2.

Fig. 6 is a diagram of the data structure of the keyword information database D3. The keyword information database D3 is built with a plurality of items of keyword information 21. The keyword information 21 includes, for example, adjectives such as "red" and "white", nouns such as "car" and "bag", and verbs such as "run" and "talk". Moreover, "red car", a combination of an adjective and a noun, is stored within the keyword information database D3 as the keyword information 21a, along with "white bag" as the keyword information 21b and "red bag" as the keyword information 21c.

These items of keyword information 21 (21a-21c) may be preliminarily stored within the keyword information database D3. However, in the present embodiment, the configuration extracts the word information 22 from the dictionary database D2 through the information generating part 15a described later and generates the keyword information 21 (21a-21c).

Fig. 7 is a diagram of the data structure of the advertisement information database D4. The advertisement information database D4 is built with the keyword information 21 and the advertisement information 9 mutually associated with each other. This advertisement information database D4 is built by the advertisement information 9 within the management ID database D1 and the keyword information 21 within the keyword information database D3 being associated by the information association executing part 15b described later.

For example, the advertisement information 9a-9c within the management ID database D1 and the keyword information 21a-21c within the keyword information database D3 are associated with each other and stored within this advertisement information database D4. Therefore, based on the keyword information 21a, the associated advertisement information 9a and the management ID 14a thereof can be specified.

On the other hand, when the association between the advertisement information 9a and the keyword information 21a is cancelled by the information association canceling part 15c, these items of information are deleted from the advertisement information database D4. Additionally, when advertisement information different from the advertisement information 9a is newly associated with the keyword information 21a by the information association executing part 15b, they are stored within the advertisement information database D4 as being mutually associated with each other. Moreover, when keyword information different from the keyword information 21a is newly associated with the advertisement information 9a by the information association executing part 15b, these are stored within the advertisement information database D4 as being associated with each other.

Next, various functions exerted by the CPU 15 using the advertisement information management program P will be described below.

The information generating part 15a has a function to generate the keyword information 21. Specifically, the information generating part 15a extracts the word information 22 from the dictionary database D2 and stores it within the keyword information database D3 as the keyword information 21. Moreover, the information generating part 15a also has a function to combine the plurality of items of word information 22 within the dictionary database D2 in order to generate one item of the keyword information 21.

For example, the word information 22 of the adjective "red" and the word information 22 of the noun "car" are combined to generate the keyword information 21a of "red car" and stored within the keyword information database D3. Moreover, the word information 22 of the noun "car" and the word information 22 of the verb "run" can be combined to generate the keyword information 21 of "car runs.

The information generating part 15a generates keyword information 21a-21c based on the word information 22 when the advertisement information management server 1 receives advertisement information 9a-9c from the agent's server 4. It then sends the keyword information 21a-21c to the information association executing part 15b. However, it is understood that the keyword information 21a-21c may be preliminarily generated before the advertisement information management server 1 receives the advertisement information 9a-9c from the agent's server 4.

The information association executing part 15b has a function to associate the advertisement information 9a-9c received from the agent's server 4 with the keyword information 21a-21c. Specifically, when the advertisement information management server 1 receives the advertisement information 9a-9c from the agent's server 4, the keyword information 21a-21c is extracted from the keyword information database D3 with respect to the advertisement information 9a-9c, which is associated with the advertisement information 9a-9c, respectively, and stored within the advertisement information database D4.

The information association canceling part 15c has a function to cancel the association between the advertisement information 9 and the keyword information 21 that are stored within the advertisement information database D4 and mutually associated with each other. For example, in a case in which posting of the advertisement information 9a on the advertisement providing site 12a is completed, when the advertisement information management server 1 receives information that indicates the completion of the posting from the agent's server 4, the information association canceling part 15c cancels the association between the advertisement information 9a and the keyword information 21a based on the information and deletes both from the advertisement information database D4.

This enables the information association executing part 15b to associate keyword information different from the keyword information 21a with the advertisement information 9a when new posting of the advertisement information 9a on another advertisement providing site is started. Moreover, it enables the information association executing part 15b to associate advertisement information different from the advertisement information 9a with the keyword information 21a. As described above, by dynamically associating the keyword information with the advertisement information according to the circumstances, the same keyword information can be repeatedly reused for different advertisement information, thus contributing to saving resources for keyword information.

The information sending part 15d has a function to send the received advertisement information 9a-9c to the agent's server 4 after completion of the association with the keyword information 21a-21c. At this time, it also sends the keyword information 21a-21c with the advertisement information 9a-9c. Furthermore, when the advertisement information management server 1 has the phone number information 10, it also sends the phone number information 10 to the agent's server 4 with the advertisement information 9a-9c.

It is understood that if the agent's server 4 has the phone number information 10, the phone number information 10 does not need to be sent from the advertisement information management server 1 to the agent's server 4. The agent's server 4 only needs to send the phone number information 10 to the advertisement providing servers 5a-5c with the advertisement information 9a-9c received from the advertisement information management server 1.

The information acquisition part 15e has a function to acquire the voice information 23 vocally inputted in a received call. A case related to the advertisement information 9a is described below. For example, when the user U who has viewed the advertisement information 9a posted on the advertisement providing site 12a makes a call from the user's phone 8 based on the phone number information 10 posted with the advertisement information 9a, the call is received by the call receiving server 2. Subsequently, when the user U vocally inputs the voice information 23 (i.e., by saying the keyword) based on the keyword information 21a "red car" posted with the advertisement information 9a during the call, the voice information 23 is forwarded from the call receiving server 2 to the information acquisition part 15e and acquired by the information acquisition part 15e. The information acquisition part 15e then sends the voice information 23 to the information analyzing part 15f.

The information analyzing part 15f has a function to phonetically analyze the voice information 23 received from the information acquisition part 15e. Specifically, based on a phonetic analyzing function (also referred to as a vocal identifying function), text information 24 included within the voice information 23 is extracted. The text information 24 has the information content of "red car", which corresponds to the keyword information 21a. The information analyzing part 15f sends the analyzed text information 24 to the information extracting part 15g.

The information extracting part 15g has a function to extract the advertisement information 9 associated with the keyword information 21 corresponding to the text information 24 from the advertisement information database D4 when it receives the text information 24 from the information analyzing part 15f. Specifically, based on the text information 24 "red car" from the information analyzing part 15f, the text information 24 and the keyword information 21 within the advertisement information database D4 are crosschecked in order to specify the keyword information 21a of "red car." The advertisement information 9a associated with the keyword information 21a is then specified and extracted.

The advertisement information management server 1 specifies, based on the extracted advertisement information 9a, a management ID 14a from the management ID database D1 built within the advertisement information management server 1 or within the agent's server 4. With information such as the MID 14p, DID 14q, PID 14r, SID 14s, and UID 14t possessed by the management ID 14a, it can be specified that the call from the user U has been made based on the advertisement information 9a by the advertiser A posted on the advertisement providing site 12a. Therefore, charging of an advertisement fee and the determination of the advertisement effect are readily managed for each advertising agent, each advertisement providing site, each personal page, and each item of merchandise. In addition, the advertisement information management server 1 sends the information of the advertiser A specified based on the management ID 14a to the call receiving server 2.

Next, the functions of the call receiving server 2 will be described below.

The call receiving server 2 is a server computer for receiving a call from the user's phone 8 of the user U and it is connected to the advertisement information management server 1 and the telephone network N. The user's phone 8 and the advertiser's phone 7 of the advertiser A are also connected to this telephone network N, and a call can be made by the user U to the advertiser A via the call receiving server 2.

The call receiving server 2 has an internal CPU (central processing unit), which is not shown, and the CPU functions as a call receiving part, a call destination information receiving part, and a call connecting part. In addition, the call receiving server 2 has an internal storage device, which is not shown, and in the storage device, connection number information of the advertiser A (call destination) that provides the advertisement information 9a-9c is stored. Moreover, connection number information of other advertisers that provide other advertisement information is also stored.

The call receiving part has a function to receive a call made from the user's phone 8. Specifically, when the user U who has viewed the advertisement providing site 12a inputs the phone number information 10 posted in the advertisement frame 13a with the advertisement information 9a into the user's phone 8, a call is made to the call receiving server 2. The call receiving part receives the call and, through an automatic response function, plays a voice message for the user U stating, "Please vocally input the keyword".

When the user U vocally inputs the keyword information 21a "red car" posted on the advertisement frame 13a with the advertisement information 9a from the user's phone 8, the call receiving part receives the voice information 23 and forwards it to the information acquisition part 15e of the advertisement information management server 1.

The call destination information receiving part has a function to receive, from the advertisement information management server 1, the information of the advertiser A specified based on the keyword information 21a obtained from the voice information 23. The received information of the advertiser A is then sent to the call connecting part.

The call connecting part has a function to extract connection number information of the advertiser A from the storage device based on the information of the advertiser A received from the call destination information receiving part. Based on the connection number information, the call from the user U is then connected to the advertiser's phone 7. This enables the user U and the advertiser A to talk to each other.

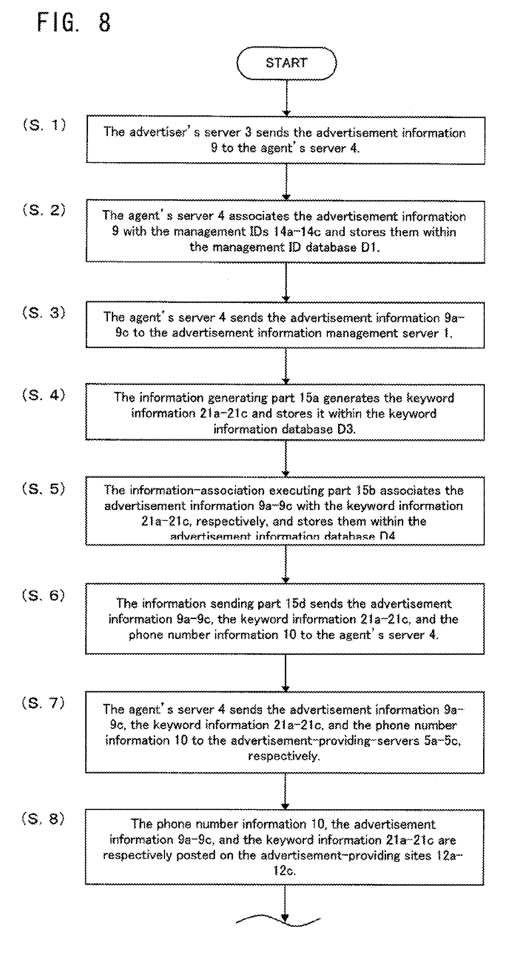

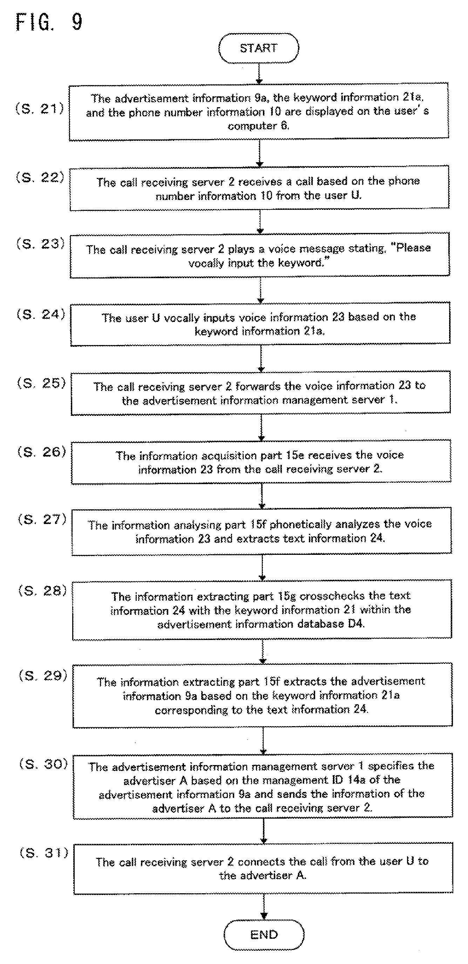

Next, the operations of the advertisement information management system S using the advertisement information management method according to this embodiment will be described with reference to the flowcharts shown in Fig. 8 and Fig. 9. Firstly, the procedure leading to the stage where the advertisement information 9 from the advertiser A is posted on the advertisement providing sites 12a-12c as the advertisement information 9a-9c will be described with reference to Fig. 8.

Based on a request from the advertiser A for posting an advertisement, the advertiser's server 3 sends the advertisement information 9 to the agent's server 4 (S. 1). The agent's server 4 associates the received advertisement information 9 with the management IDs 14a-14c, determines them as advertisement information 9a-9c, respectively, and stores them within the management ID database D1 (S. 2). The advertisement information 9a-9c is then sent to the advertisement information management server 1 (S. 3).

In the advertisement information management server 1, when the advertisement information 9a-9c is received, the information generating part 15a generates keyword information 21a-21c based on the dictionary database D2 and stores the keyword information 21a-21c within the keyword information database D3 (S. 4). The information association executing part 15b then associates the advertisement information 9a-9c with the keyword information 21a-21c, respectively, and stores them within the advertisement information database D4 (S. 5). When the associating is completed, the information sending part 15d sends the advertisement information 9a-9c, the keyword information 21a-21c, and the phone number information 10 to the agent's server 4 (S. 6).

When the agent's server 4 receives the advertisement information 9a-9c, the keyword information 21a-21c, and the phone number information 10 from the advertisement information management server 1, it sends the advertisement information 9a, the keyword information 21a, and the phone number information 10 to the advertisement providing server 5a while sending the advertisement information 9b, the keyword information 21b, and the phone number information 10 to the advertisement providing server 5b and the advertisement information 9c, the keyword information 21c, and the phone number information 10 to the advertisement providing server 5c (S. 7). The advertisement information 9a, the keyword information 21a, and the phone number information 10 are posted on the advertisement providing site 12a, the advertisement information 9b, the keyword information 21b, and the phone number information 10 are posted on the advertisement providing site 12b, and the advertisement information 9c, the keyword information 21c, and the phone number information 10 are posted on the advertisement providing site 12c (S. 8).

Next, the procedure leading to the stage where the call from the user U who has accessed the advertisement providing site 12a is connected to the advertiser A will be described with reference to Fig. 9.

When the user U accesses the advertisement providing site 12a using the user's computer 6, the advertisement information 9a, the keyword information 21a, and the phone number information 10 posted in the advertisement frame 13a are displayed on the user's computer 6 (S. 21). When the user U makes a call based on the phone number information 10 from the user's phone 8, the call receiving server 2 receives the call (S. 22). When the call receiving server 2 plays a voice message stating "Please vocally input the keyword" (S. 23) and the user U vocally inputs the voice information 23 based on the keyword information 21a (S. 24), the call receiving server 2 sends the voice information 23 to the advertisement information management server 1 (S. 25).

In the advertisement information management server 1, the information acquisition part 15e receives the voice information 23 from the call receiving server 2 (S. 26). The information analyzing part 15f then phonetically analyzes the voice information 23 and extracts the text information 24 therefrom (S. 27). The information extracting part 15g crosschecks the extracted text information 24 with the keyword information 21 within the advertisement information database D4 (S. 28). Based on the keyword information 21a corresponding to the text information 24, the advertisement information 9a is then extracted (S. 29). The advertisement information management server 1 specifies the management ID 14a based on the advertisement information 9a and performs computing processes necessary for charging the advertisement fee. At the same time, it specifies the advertiser A based on the management ID 14a associated with the advertisement information 9a and sends the information of the advertiser A to the call receiving server 2 (S. 30).

When the call receiving server 2 receives the information of the advertiser A from the advertisement information management server 1, it connects the call from the user U to the advertiser A based on the connection number information of the advertiser A (S. 31).

In addition, when the posting of the advertisement information 9a on the advertisement providing site 12a is discontinued due to expiration of the period for posting the advertisement or termination of a contract for advertising, etc., the information association canceling part 15c cancels the association between the advertisement information 9a and the keyword information 21a and deletes the information of the advertisement information 9a and the keyword information 21a from the advertisement information database D4. This enables the advertisement information 9a to be associated with other keyword information 21, and the keyword information 21a is in a state in which it can also be associated with other advertisement information 9.

Furthermore, when the advertisement information 9a is newly posted on an advertisement providing site different from the advertisement providing site 12a, for example, the information association executing part 15b associates keyword information 21 different from the keyword information 21a with the advertisement information 9a and newly stores them within the advertisement information database D4. Moreover, when advertisement information 9 different from the advertisement information 9a is newly posted on the advertisement providing site 12a, the information association executing part 15b associates the advertisement information 9 different from the advertisement information 9a with the keyword information 21a and newly stores them within the advertisement information database D4.

A preferred embodiment of the present invention has been described above, but the present invention is not limited to this and it is possible to make various modifications and changes within the scope of the invention.

For example, as already described above, the phone number information 10 may include the identification information 11 for specifying the advertiser A. In this case, when the user U makes a call based on the identification information 11, the call can be connected to the advertiser's phone 7 based on the identification information 11 without the call receiving server 2 receiving the call. In addition, the user U is promoted to input the voice information 23 only when the advertiser A receives the call and responds, and it is possible to specify the management ID 14a associated with the advertisement information 9a based on the voice information 23 inputted by the user U. When the advertiser A does not respond to the call, the call receiving server 2 does not receive it, and therefore, the user U does not have to be charged for the phone charge when the advertiser A is not available to answer the call.

Moreover, the user's phone 8 includes not only fixed line telephones but also the concept of IP phones that are not connected to the telephone network N but are connected to an Internet network W and are capable of making a call to the call receiving server 2 via the Internet network W. In that case, the user's computer 6 may also act as the user's phone 8. In addition, link processing to the call receiving server 2 may be performed on the phone number information 10 posted on the advertisement providing site 12a, whereby a call to the call receiving server 2 may be made when the user U clicks the phone number information 10 with a mouse on the user's computer 6 acting as an IP phone.

For example, using a function of a script embedded within the advertisement providing site 12a, the keyword information 21a may be displayed on the user's computer 6 with the advertisement information 9a. In this case, the advertisement information 9a is posted on the advertisement providing site 12a and the script is embedded, but the keyword information 21a is not posted. When the advertisement providing site 12a is accessed by the user's computer 6, information that indicates the advertisement providing site 12a or information that indicates the advertisement information 9a is then sent to the advertisement information management server 1 by the function of the script. In the advertisement information management server 1, based on the received information, the management ID database D1, and the advertisement information database D4, the keyword information 21a associated with the advertisement information 9a posted on the advertisement providing site 12a is specified. The keyword information 21a is then sent to the advertisement providing site 12a or directly to the user's computer 6. On the user's computer 6, the keyword information 21a is displayed with the advertisement information 9a.

According to this method, dynamic use of the keyword information 21 is actualized at a higher level of convenience. Specifically, according to the time and the number of times that the user U views the advertisement information 9a posted on the advertisement providing site 12a, the association between the advertisement information 9a and the keyword information 21 can be changed. In addition, for example, it is possible to associate different keyword information 21 with the advertisement information 9a for each time of viewing and display the keyword information 21 on the user's computer 6. Therefore, it is also possible to determine the advertisement effect for each time frame or change the mode of charging advertisement fees for each time of viewing. Moreover, reuse of the keyword information 21 that is not used frequently can be actively attempted, and it is therefore possible to further contribute to saving resources for keyword information.

It is understood that the keyword information 21a and the phone number information 10 are not necessarily posted on the advertisement providing site 12a with the advertisement information 9a, and the advertisement information 9a alone may be posted on the advertisement providing site 12a, link processing to another site page (referred to as a landing page) may be performed on the advertisement information 9a, the phone number information 10 and the keyword information 21a may be posted on the landing page, and the landing page may be displayed by clicking the advertisement information 9a with the mouse.

### Brief Description of the Drawings

Fig. 1 is a schematic block diagram showing the overall configuration of an advertisement information management system using an advertisement information management method according to the embodiment of the present invention.

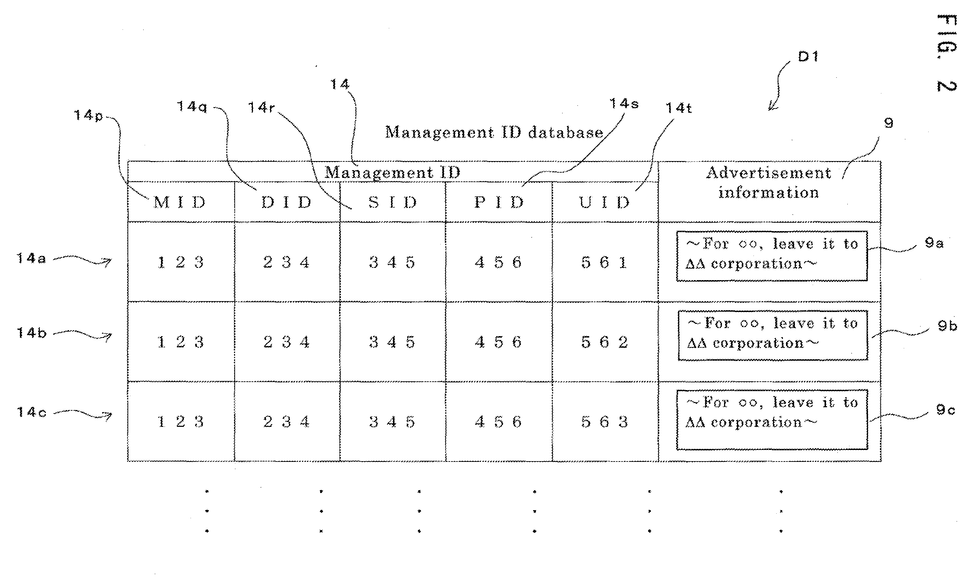

Fig. 2 is a diagram of the data structure of a management ID database built within the agent's server shown in Fig. 1.
Fig. 3 is an example of a display screen for a web page of anadvertisement providing site built within the advertisement providing server shown in Fig. 1.
Fig. 4 is a schematic block diagram showing the internal configuration of the advertisement information management server shown in Fig. 1.

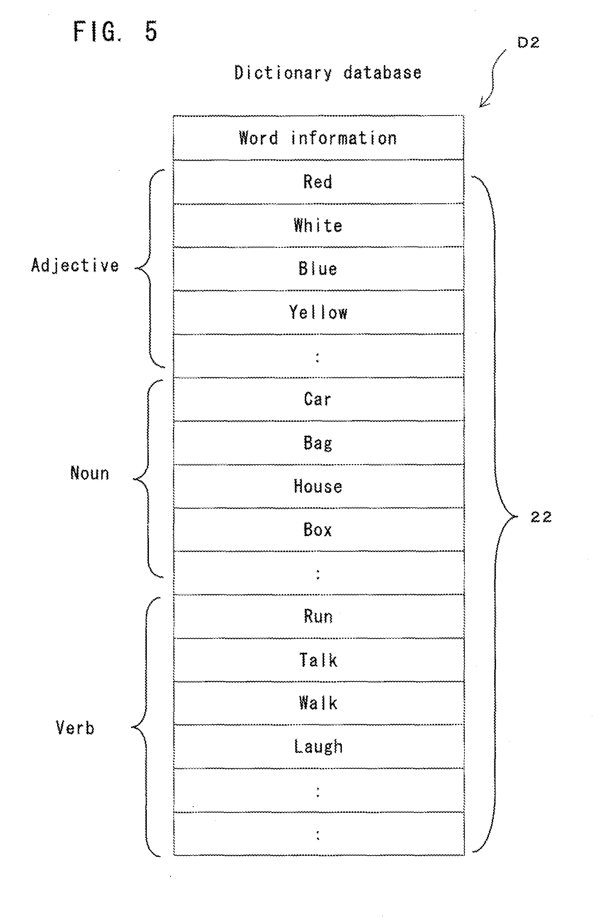

Fig. 5 is a diagram of the data structure of a dictionary database built within the advertisement information management server shown in Fig. 4.

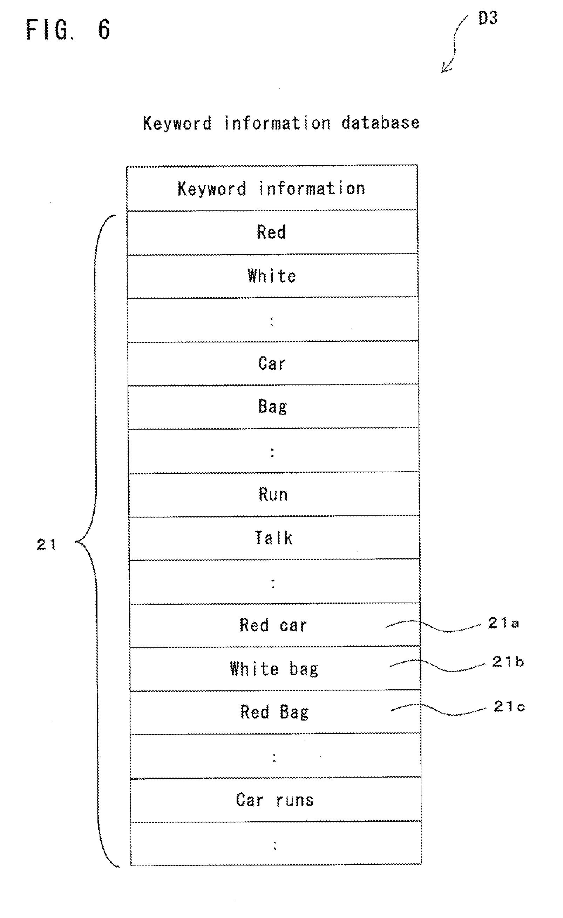

Fig. 6 is a diagram of the data structure of a keyword information database built within the advertisement information management server shown in Fig. 4.

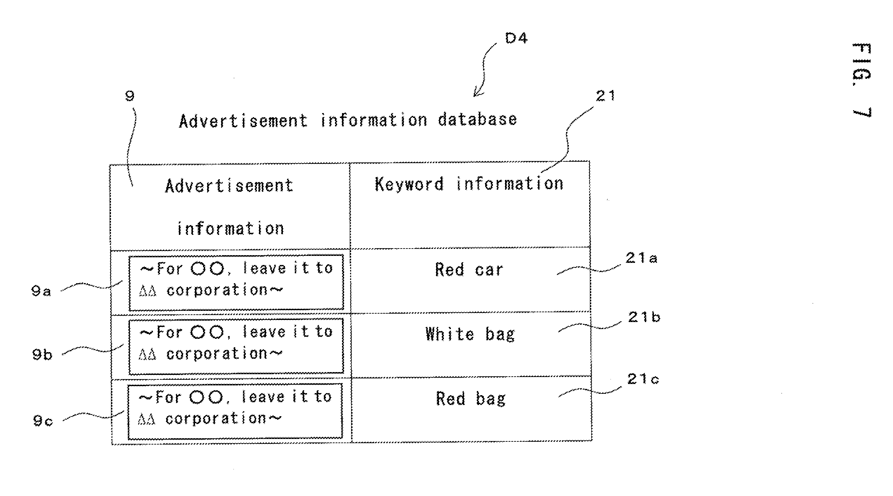

Fig. 7 is a diagram of the data structure of an advertisement information database built within the advertisement information management server shown in Fig. 4.
Fig. 8 is a flowchart describing operations of the advertisement information management system using the information management method according to the embodiment of the present invention in order to describe the procedure leading to the stage where advertisement information is posted on an advertisement providing site.
Fig. 9 is a flowchart describing operations of the advertisement information management system using the information management method according to the embodiment of the present invention in order to describe the procedure leading to the stage where a call made by a user is connected to an advertiser.

### Description of the Symbols

- A:: Advertiser (call destination)
- D1:: Management ID database
- D2:: Dictionary database
- D3:: Keyword information database
- D4:: Advertisement information database
- N:: Telephone network
- P:: Advertisement information management program
- S:: Advertisement information management system
- U:: User
- W:: Internet network
- 1:: Advertisement information management server (advertisement information management device)
- 2:: Call receiving server (call receiving device, receiver of a call)
- 3:: Advertiser's server
- 3a:: Advertiser's site
- 4:: Agent's server
- 5a-5c:: Advertisement providing servers
- 6:: User's computer
- 7:: Advertiser's phone
- 8:: User's phone
- 9,: 9a-9c: Advertisement information
- 10:: Phone number information
- 11:: Identification information
- 12a-12c:: Advertisement providing sites
- 13a:: Advertisement frame
- 14, 14a-14c:: Management IDs
- 14p:: MID (Advertiser ID)
- 14q:: DID (Advertising agent ID)
- 14r:: PID (Merchandise ID)
- 14s:: SID (Advertisement providing site ID)
- 14t:: UID (Personal page ID)
- 15:: CPU (Central processing unit, computer)
- 15a:: Information generating part
- 15b:: Information association executing part
- 15c:: Information association canceling part
- 15d:: Information sending part
- 15e:: Information acquisition part
- 15f:: Information analyzing part
- 15g:: Information extracting part
- 16:: Storage device
- 21, 21a-21c:: Keyword information
- 22:: Word information
- 23:: Voice information
- 24:: Text information

## Claims

1. An advertisement information management method comprising the steps of:
acquiring voice information vocally inputted in a received call,
extracting text information included within the voice information by phonetically analyzing the voice information; and,
extracting advertisement information associated with keyword information corresponding to the text information from an advertisement information database built with the keyword information and the advertisement information associated with each other.

2. The advertisement information management method according to Claim 1, wherein said advertisement information is associated with at least any one of:
advertiser information that indicates the advertiser related to the advertisement information,
advertisement providing site information that indicates the advertisement providing site to which the advertisement information is provided; or,
merchandise information that indicates the merchandise related to the advertisement information.

3. The advertisement information management method according to Claim 1, further comprising the step of generating said keyword information based on a dictionary database built with a plurality of items of word information.

4. The advertisement information management method according to Claim 1, further comprising the steps of:
associating said advertisement information with said keyword information; and,
sending said keyword information externally.

5. The advertisement information management method according to Claim 4, wherein during said sending, phone number information that indicates a receiver of said call is sent externally with said keyword information.

6. The advertisement information management method according to Claim 4, wherein during said sending, at least one of either said advertisement information or identification information for identifying the call destination associated with the advertisement information is sent externally with said keyword information.

7. The advertisement information management method according to Claim 4, further comprising the steps of:
canceling the association between said advertisement information and said keyword information; and,
associating another advertisement information different from the advertisement information with said keyword information.

8. An advertisement information management device comprising:
an information acquisition part that acquires voice information vocally inputted in a received call,
an information analyzing part that extracts text information included within the voice information by phonetically analyzing the voice information; and,
an information extracting part that extracts advertisement information associated with keyword information corresponding to the text information from an advertisement information database built with the keyword information and the advertisement information associated with each other.

9. An advertisement information management program that causes a computer to function as:
an information acquisition part that acquires voice information vocally inputted in a received call,
an information analyzing part that extracts text information included within the voice information by phonetically analyzing the voice information; and,
an information extracting part that extracts advertisement information associated with keyword information corresponding to the text information from an advertisement information database built with the keyword information and the advertisement information associated with each other.

10. The advertisement information management program according to Claim 9 that causes a computer to further function as:
an information association executing part that associates said advertisement information with said keyword information and stores them in said advertisement information database; and,
an information sending part that sends said keyword information externally.

## Amended claims

### Amended claims under Art. 19.1 PCT

**1.** (After correction)An advertisement information management method comprising the steps of:
associating advertisement information with keyword information,
sending the keyword information externally,
acquiring voice information vocally inputted in a received call,
extracting text information included within the voice information by phonetically analyzing the voice information; and,
extracting the advertisement information associated with the keyword information corresponding to the text information from an advertisement information database built with the keyword information and the advertisement information associated with each other.

**2.** The advertisement information management method according to Claim 1, wherein said advertisement information is associated with at least any one of:
advertiser information that indicates the advertiser related to the advertisement information,
advertisement providing site information that indicates the advertisement-providing site to which the advertisement information is provided; or,
merchandise information that indicates the merchandise related to the advertisement information.

**3.** The advertisement information management method according to Claim 1, further comprising the step of generating said keyword information based on a dictionary database built with a plurality of items of word information.

**4.** (Deleted)

**5.** (After correction) The advertisement information management method according to Claim 1, wherein during said sending, phone number information that indicates a receiver of said call is sent externally with said keyword information.

**6.** (After correction) The advertisement information management method according to Claim 1, wherein during said sending, at least one of either said advertisement information or identification information for identifying the call destination associated with the advertisement information is sent externally with said keyword information.

**7.** (After correction) The advertisement information management method according to Claim 1, further comprising the steps of:
canceling the association between said advertisement information and said keyword information; and,
associating advertisement information different from the advertisement information with said keyword information.

**8.** (After correction) An advertisement information management device comprising:
an information association executing part that associates advertisement information with keyword information,
an information sending part that sends said keyword information externally,
an information acquisition part that acquires voice information vocally inputted in a received call,
an information analyzing part that extracts text information included within the voice information by phonetically analyzing the voice information and,
an information extracting part that extracts the advertisement information associated with the keyword information corresponding to the text information from an advertisement information database built with said keyword information and the advertisement information associated with each other.

**9.** (After correction) An advertisement information management program that causes a computer to function as:
an information association executing part that associates advertisement information with keyword information,
an information sending part that sends said keyword information externally,
an information acquisition part that acquires voice information vocally inputted in a received call,
an information analyzing part that extracts text information included within the voice information by phonetically analyzing the voice information; and,
an information extracting part that extracts the advertisement information associated with the keyword information corresponding to the text information from an advertisement information database built with said keyword information and the advertisement information associated with each other.

**10.** (Deleted)
